# EUROPÄISCHE PATENTANMELDUNG

(11) **EP 2 821 965 A1**
(43) Veröffentlichungstag der Anmeldung: **07.01.2015**
(21) Anmeldenummer: 14173722.1
(22) Anmeldetag: 24.06.2014
(51) Int. Cl.: G06T 7/00

(54) **Kameraanordnung, Verfahren und Vorrichtung zum Betreiben einer Kameraanordnung**

(30) Priorität: 02.07.2013 DE 102013212843
(71) Anmelder: Continental Automotive GmbH, 30165 Hannover (DE)
(72) Erfinder: von Rosenberg, Harald, 78126 Königsfeld (DE); Schröer, Frank, 81476 München (DE); Garschke, Thomas, 78250 Tengen (DE)

(57) **Zusammenfassung**

Eine Kameraanordnung für ein Kraftfahrzeug (100) umfasst:
- eine Kamera (102) mit einer optischen Mittelachse (103),
- eine erste Laservorrichtung (104), die eingerichtet ist einen ersten Laserstrahl (114) zu erzeugen,
- eine zweite Laservorrichtung (105), die eingerichtet ist einen zweiten Laserstrahl (115) zu erzeugen, wobei der erste (114) und der zweite (115) Laserstrahl jeweils gleichgerichtet zur Mittelachse (103) sind und die erste Laservorrichtung (104) und die zweite Laserstrahlvorrichtung (105) einen vorgegebenen Abstand (106) zueinander in einer Ebene quer zur Mittelachse (103) aufweisen.

## Beschreibung

Die Erfindung betrifft eine Kameraanordnung für ein Kraftfahrzeug. Die Erfindung betrifft weiterhin ein Verfahren sowie eine korrespondierende Vorrichtung zum Betreiben einer Kameraanordnung für ein Kraftfahrzeug.

In Kraftfahrzeugen werden Systeme eingesetzt, die aus Einzelbildern verschiedener Kameras, die an unterschiedlichen Orten des Kraftfahrzeugs montiert sind, ein Gesamtbild der Umgebung des Kraftfahrzeugs erstellen. Dieses Gesamtbild wird beispielsweise auf einer Anzeigevorrichtung des Kraftfahrzeugs angezeigt und für Rückfahrt- oder Einparkassistenzsysteme verwendet. Für eine gute Darstellung ohne Verzerrungen muss das System kalibriert werden. Beispielsweise werden die Kamerabilder manuell oder mittels externen Hilfsmittels wie beispielsweise Markern auf dem Boden ausgerichtet und kalibriert. Hierbei werden Parameter wie die Kameraposition bezüglich eines Fahrzeugkoordinatensystems und die Ausrichtungswinkel der Kamera innerhalb dieses Fahrzeugkoordinatensystems bestimmt.

Es ist wünschenswert, eine Kameraanordnung für ein Kraftfahrzeug anzugeben, die ein zuverlässiges Kalibrieren der Kameraanordnung ermöglicht. Zudem ist es wünschenswert ein Verfahren sowie eine korrespondierende Vorrichtung für ein Kraftfahrzeug anzugeben, das beziehungsweise die ein zuverlässiges Kalibrieren einer Kameraanordnung ermöglicht.

Gemäß eines Aspekts der Erfindung umfasst eine Kameraanordnung für ein Kraftfahrzeug ein Kamera mit einer optischen Mittelachse. Die Kameraanordnung umfasst eine erste Laservorrichtung, um einen ersten Laserstrahl zu erzeugen. Die Kameraanordnung umfasst eine zweite Laservorrichtung, um einen zweiten Laserstrahl zu erzeugen. Der erste und der zweite Laserstrahl sind jeweils gleichgerichtet zur Mittelachse. Die erste Laservorrichtung und die zweite Laserstrahlvorrichtung weisen einen vorgegebenen Abstand zueinander in einer Ebene quer zur Mittelachse auf.

Die Kamera ist eingerichtet, ein Bild zu erfassen. Eine jeweilige Projektion des ersten und des zweiten Laserstrahls ist jeweils in dem Bild abgebildet. Je nach Abstand der Kamera beziehungsweise der Kameraanordnung von dem in dem Bild erfassten Untergrund verändert sich ein Abstand der Projektionen in dem erfassten Bild. Je näher die Kameraanordnung an dem Untergrund ist, desto weiter sind die abgebildeten Projektionen voneinander entfernt. Je weiter die Kameraanordnung von dem Untergrund entfernt ist, desto näher liegen die abgebildeten Projektionen aneinander. Da der vorgegebene Abstand zwischen den Laservorrichtungen und insbesondere auch die Anordnung der Laservorrichtungen relativ zur Kamera bekannt ist, ist es einfach möglich, die Einbauhöhe der Kameraanordnung am Kraftfahrzeug zu ermitteln. Dies ist insbesondere möglich, wenn der Einbauwinkel der Kamera beziehungsweise der Kameraanordnung bekannt ist.

In Abhängigkeit des Verhältnisses zwischen dem vorgegebenen Abstand und dem Abstand der Projektionen ist es möglich, Objekte beziehungsweise Geometrien, die im erfassten Bild enthalten sind, auszumessen. Zudem ist es mit der Kameraanordnung einfach möglich, die Länge und/oder die Breite des Kraftfahrzeugs zu bestimmen, an der die Kameraanordnung montiert ist. Hierzu wird insbesondere die Abbildungsfunktion der Kameralinse und der Einbauwinkel der Kamera berücksichtigt. Eine seitlich an dem Kraftfahrzeug angeordnete Kameraanordnung wird insbesondere verwendet, um Informationen über die Länge des Kraftfahrzeugs zu ermitteln. Eine im Frontbereich oder im Heckbereich angeordnete Kameraanordnung wird insbesondere verwendet, um Informationen über die Breite des Kraftfahrzeugs zu ermitteln. Die Laserstrahlvorrichtungen sind gemäß Ausführungsformen mit der Kamera in einem gemeinsamen Gehäuse der Kameraanordnung verbaut. Durch die Laserstrahlvorrichtungen ist es einfach möglich, die Kameraanordnung an dem Kraftfahrzeug zu kalibrieren, beispielsweise indem die Einbauhöhe der Kameraanordnung ermittelt wird.

Gemäß weiteren Ausführungsformen weist die Kameraanordnung drei oder mehr Laservorrichtungen auf. Die drei oder mehr Laservorrichtungen sind in einer vorgegebenen Geometrie relativ zueinander und relativ zu der Kamera angeordnet. Beispielsweise sind die drei Laservorrichtungen in Form eines gleichschenkligen Dreiecks angeordnet und die Kamera im Zentrum des Dreiecks. Bei der Auswertung des erfassten Bilds werden die Laserstrahlen der drei oder mehr Laservorrichtungen verwendet.

Gemäß Ausführungsformen weist die Kameraanordnung eine Steuerschnittstelle zum Empfangen von Steuerinformationen auf, um die Erzeugung des ersten und des zweiten Laserstrahls zu aktivieren und/oder zu beenden. Somit ist es möglich, die Laserstrahlvorrichtungen durch eine externe Steuereinheit ein- und auszuschalten. Somit ist bekannt, wann die Laservorrichtungen aktiviert sind. Insbesondere werden die Laservorrichtungen aktiviert, wenn eine Kalibrierung der Kameraanordnung durchgeführt werden soll. Somit ist auch einer Bildverarbeitungseinheit, die das von der Kamera erfasste Bild bearbeitet, bekannt, wann die Laser aktiviert sind. Die zur Kalibrierung mit Hilfe der Laserstrahlen notwendigen Bildbearbeitungsschritte werden insbesondere nur dann durchgeführt, wenn die Laservorrichtungen aktiviert sind. Beispielsweise wird mittels der Bildverarbeitungseinheit im erfassten Bild nach den Projektionen der Laserstrahlen gesucht.

Gemäß eines weiteres Aspekts der Erfindung umfasst ein System für ein Kraftfahrzeug zum Erstellen eines Gesamtbilds einer Umgebung des Kraftfahrzeugs eine Mehrzahl von Kameraanordnungen. Die Kameraanordnungen sind insbesondere an unterschiedlichen Orten des Kraftfahrzeugs montiert und jeweils eingerichtet, Einzelbilder zu erfassen. Die Einzelbilder werden dann zu dem Gesamtbild der Umgebung des Kraftfahrzeugs zusammengefügt. Das Gesamtbild wird beispielsweise für ein so genanntes Surround View System des Kraftfahrzeugs verwendet, insbesondere für ein so genanntes Top View System.

Gemäß weiteren Aspekten zeichnet sich die Erfindung aus durch ein Verfahren zum Betreiben einer Kameraanordnung für ein Kraftfahrzeug sowie einer Vorrichtung, die dazu ausgebildet ist, das Verfahren durchzuführen.

Gemäß Ausführungsformen wird ein erster und ein zweiter Laserstahl erzeugt, wobei der erste und der zweite Laserstrahl einen vorgegebenen Abstand zueinander aufweisen. Ein Bild wird mittels einer Kamera erfasst, so dass ein jeweilige Projektion des erste und des Laserstrahls jeweils in dem Bild abgebildet sind. Ein Abstand der Projektionen im Bild zueinander wird ermittelt.

Gemäß weiteren Ausführungsformen werden drei oder mehr Laserstrahlen erzeugt.

Gemäß Ausführungsformen wird eine Strecke zwischen der Kamera und dem Untergrund, der auf dem Bild abgebildet ist und auf den der erste und der zweite Laserstrahl projiziert werden, in Abhängigkeit von dem vorgegebenen Abstand und dem ermittelten Abstand ermittelt. Je nachdem, wie groß die Strecke ist, verändert sich die Distanz der Projektionen der Laserstrahlen im erfassten Bild zueinander. Beispielsweise wird eine Anzahl der Pixel zwischen den Projektionen ermittelt, um den Abstand zwischen den Projektionen zu ermitteln. Somit ist es beispielsweise möglich, die Einbauhöhe der Kamera im Kraftfahrzeug zu bestimmen.

Gemäß weiteren Ausführungsformen wird eine Abmessung eines Bildelements des erfassten Bildes ermittelt, das ein Objekt abbildet.

Das Bildelement bildet ein Objekt ab. Ein Verhältnis der ermittelten Abmessung zu dem ermittelten Abstand wird ermittelt. Eine tatsächliche Abmessung des Objekts wird in Abhängigkeit des ermittelten Verhältnisses ermittelt. Da der tatsächliche Abstand zwischen den Laserstrahlen bekannt ist, ist es möglich, durch einen Vergleich des ermittelten Abstands der Projektionen der Laserstrahlen im Bild zueinander und der ermittelten Abmessung des Bildelements, die tatsächliche Abmessung des Objekts zu ermitteln.

Gemäß Ausführungsformen wird die Länge des Kraftfahrzeugs mittels einer seitlich am Kraftfahrzeug angeordneten Kameraanordnung ermittelt. Die Breite des Kraftfahrzeugs wird gemäß Ausführungsformen mittels mindestens einer im Frontbereich und/oder Heckbereich am Kraftfahrzeug angeordnete Kameraanordnung ermittelt. Somit ist auch eine nachträgliche Montage eines Systems zum Erstellen des Gesamtbilds an dem Kraftfahrzeug möglich. Das nachträglich montierte System kann einfach kalibriert werden. Somit ist es auch möglich, die Kameras an zueinander stark unterschiedlich langen Kraftfahrzeugen zu montieren und eine verlässliche Kalibrierung zu ermöglichen. Dadurch ist es möglich, dass die entzerrten und transformierten Einzelbildern zu einem Gesamtbild mit glatten Übergängen zusammengesetzt werden.

Weitere Vorteile, Merkmale und Weiterbildungen ergeben sich aus den nachfolgenden in Verbindung mit den Figuren erläuterten Beispielen. Gleiche, gleichartige oder gleich wirkende Elemente können mit den gleichen Bezugszeichen versehen sein.

Es zeigen:
- Figur 1: eine schematische Darstellung einer Kameraanordnung,
- Figur 2: eine schematische Darstellung eines Kraftfahrzeugs gemäß Ausführungsformen,

- Figur 3: eine schematische Darstellung eines erfassten Bilds gemäß Ausführungsformen, und
- Figur 4: eine schematische Darstellung eines erfassten Bilds gemäß Ausführungsformen.

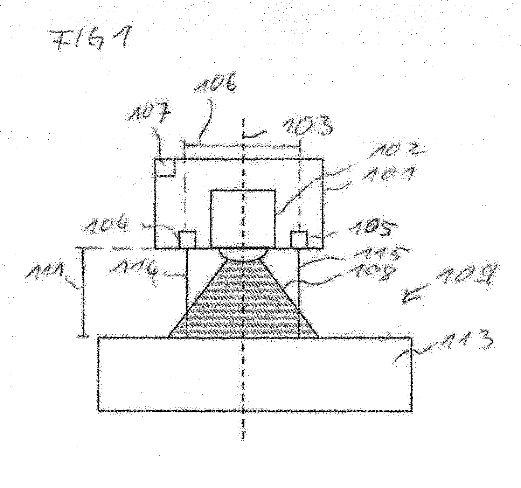

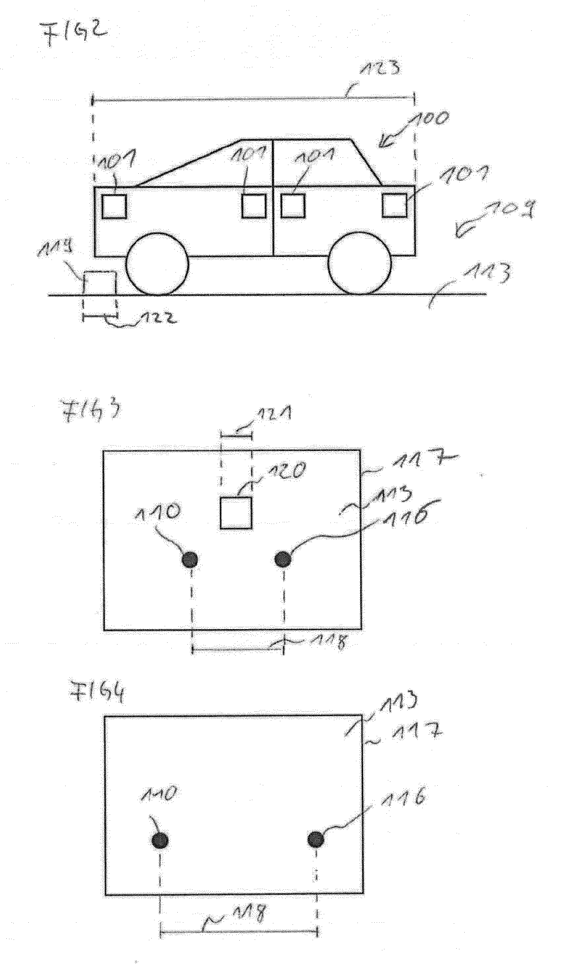

Figur 1 zeigt eine Kameraanordnung 101. Die Kameraanordnung 101 weist eine Kamera 102 zum Erfassen eines Bilds 117 (Figuren 3 und 4) einer Umgebung 109 der Kameraanordnung 101 auf. Beispielsweise erfasst die Kamera 102 ein Abbild eines Untergrunds 113.

Die Kameraanordnung 101 umfasst mindestens zwei Laservorrichtungen 104 und 105. Die Laservorrichtungen 104 und 105 sind so mit der Kamera 102 gekoppelt, dass ein Laserstrahl 114 der Laservorrichtung 104 und ein Laserstrahl 115 der Laservorrichtung 105 jeweils gleichgerichtet zu einer optischen Mittelachse 103 der Kamera 102 sind. Insbesondere sind die Laserstrahlen 114 und 115 jeweils parallel zu der Mittelachse 103. Die Laservorrichtungen 104 und 105 weisen einen vorgegebenen Abstand 106 zueinander auf. Insbesondere sind die Laservorrichtungen 104 und 105 jeweils gleich weit von der optischen Mittelachse 103 entfernt. Zudem weisen die Laserstrahlen 114 und 115 den vorgegebenen Abstand 106 zueinander auf.

Die Kameraanordnung 101 weist eine Steuerschnittstelle 107 auf. Die Steuerschnittstelle 107 ist dazu ausgebildet, Steuerinformationen zu empfangen. Die Steuerinformationen erfassen insbesondere Informationen bezüglich eines Anschaltens beziehungsweise eines Abschaltens der Laservorrichtungen 104 und 105. Über die Steuerschnittstelle 107 kann die Erzeugung der Laserstahlen 114 und 115 aktiviert beziehungsweise beendet werden.

Die Laservorrichtungen 104 und 105 sind relativ zu der Kamera 102 so angeordnet, dass Projektionen 110 und 116 (Figuren 3 und 4) der Laserstrahlen 114 und 115 auf dem Untergrund 113 unter normalen Betriebsbedingungen in einem Kamerasichtbereich 108 der Kamera 102 liegen. Der Kamerasichtbereich 108 wird insbesondere durch die verwendete Kameralinse vorgegeben. Die Abbildungsfunktion der Kameralinse ist bekannt beziehungsweise ermittelbar.

Wie schematisch in Figur 2 dargestellt, wird die Kameraanordnung 101 insbesondere für ein Kraftfahrzeug 100 verwendet. Das Kraftfahrzeug 100 weist gemäß dem dargestellten Ausführungsbeispiel vier Kameraanordnung 101 auf. Gemäß weiteren Ausführungsformen sind weniger als vier Kameraanordnungen 101 vorgesehen. Gemäß weiteren Ausführungsformen sind mehr als vier Kameraanordnungen 101 vorgesehen.

Insbesondere ist ein der Kameraanordnung 101 im Frontbereich des Kraftfahrzeugs angeordnet und eine der Kameraanordnungen 101 im Heckbereich. Jeweils eine der Kameraanordnungen 101 ist auf der linken beziehungsweise der rechten Seite des Kraftfahrzeugs 100 vorgesehen.

Die Kameraanordnungen 101 sind jeweils eingerichtet, mittels der Kamera 102 Einzelbilder der Umgebung 109 des Kraftfahrzeugs 100 aufzunehmen. Die Einzelbilder werden beispielsweise zu einem Gesamtbild zusammengesetzt. Das Gesamtbild wird beispielsweise für einen Nutzer des Kraftfahrzeugs auf einer Anzeigevorrichtung dargestellt. Somit ist es möglich, für den Nutzer des Kraftfahrzeugs die Umgebung 109 des Kraftfahrzeugs 100 aus beliebigen Perspektiven darzustellen. Beispielsweise werden die Einzelbilder mittels der so genannten SIFT-Methode (scale invariant feature transformation; Skaleninvariante Merkmalstransformation) zusammengefügt, mit der korrespondierende Punkte und Bildinhalte in den jeweiligen Einzelbildern gefunden und identifiziert werden können.

Durch die Kombination der Kamera 102 mit den Laservorrichtungen 104 und 105 in einer gemeinsamen Kameraanordnung 101 ist es möglich, das System mit den Kameras 101 so zu kalibrieren, dass das zusammenhängende Gesamtbild mit glatten Übergängen zwischen den entzerrten und transformierten Einzelbildern entsteht.

Beispielsweise wird mittels der Laserstrahlen 114 und 115 beziehungsweise deren Projektionen 110 und 116 im Bild 117 eine Strecke 111 zwischen der Kameraanordnung 101 und dem Untergrund 113 ermittelt.

Wie in Figur 3 und Figur 4 exemplarisch dargestellt weisen die Projektionen 110 und 116 in dem Bild 117 einen Abstand 118 zueinander auf. Beispielsweise wird der Abstand 118 in dem Bild 117 über eine Anzahl an Pixeln beziehungsweise Bildpunkten zwischen den Projektionen 110 und 116 ermittelt. Je nachdem wie groß die Strecke 111 zwischen der Kameraanordnung 101 und dem Untergrund 113 ist, verändert sich der Abstand 118 zwischen den Projektionen 110 und 116.

In der Darstellung der Figur 3 ist der Abstand 118 zwischen den Projektionen 110 und 116 kleiner als in der Darstellung der Figur 4. Somit ist die Strecke 111 bei der Kameraanordnung 101, die das Bild 117 der Figur 3 erfasst hat, größer als die Strecke 111 bei der Kameraanordnung 101, die das Bild 117 der Figur 4 erfasst hat. Dadurch, dass der Abstand 106 der beiden Laservorrichtungen 104 und 105 beziehungsweise der beiden Laserstrahlen 114 und 115 bekannt ist, ist aus dem Verhältnis des Abstands 106 und des Abstands 118 die genaue Strecke 111 ermittelbar. Somit ist es möglich, die Einbauhöhe der Kameraanordnung 101 am Fahrzeug 100 zu ermitteln. Die Strecke 111 wird insbesondere in Abhängigkeit eines Einbauwinkels der Kameraanordnung 101 ermittelt.

Gemäß weiteren Ausführungsformen wird eine Abmessung 122 eines Objekts 119 in der Umgebung 109 des Kraftfahrzeugs 100 ermittelt. In Figur 3 ist die Abbildung des Objekts 119 als Bildelement 120 schematisch dargestellt. Im Bild 117 weist das Bildelement 120 eine Abmessung 121 auf. Aus dem Verhältnis der Abmessung 121 zu dem Abstand 118 lässt sich auf das Verhältnis zwischen der tatsächlichen Abmessung 122 des Objekts 119 und dem Abstand 106 zwischen den Laservorrichtungen 104 und 105 schließen. Somit ist mittels der Kameraanordnung 101 die tatsächliche Abmessung 122 des Objekts 119 ermittelbar. Dadurch ist ein Ausmessen der Bildinhalte des erfassten Bilds 117 möglich.

Beispielsweise wird so eine Länge 123 des Kraftfahrzeugs 100 ermittelt. Insbesondere wird die Länge über eine oder mehrere seitlich am Kraftfahrzeug montierten Kameraanordnungen 101 ermittelt. Alternativ oder zusätzlich ist es möglich, eine Breite des Kraftfahrzeugs 100 zu ermitteln. Die Breite wird insbesondere mittels einer oder mehrerer im Frontbereich und/oder im Heckbereich des Kraftfahrzeugs 100 montierten Kameraanordnungen 101 ermittelt. Die Ermittlung der Länge 123 und/oder der Breite des Kraftfahrzeugs 100 wird insbesondere in Abhängigkeit von der Abbildungsfunktion und dem Einbauwinkel der Kamera 102 durchgeführt.

Gemäß Ausführungsformen sind die Laservorrichtungen 104 und 105 der jeweiligen Kameraanordnung 101 nur dann aktiviert, wenn ein Kalibrieren des Systems durchgeführt wird. Eine externe Steuereinheit schaltet über die Steuerschnittstelle 107 die Laservorrichtungen 104 und 105 ein. Diese Steuerinformation wird auch an die Bildverarbeitungseinheit gegeben. Somit ist es der Bildverarbeitungseinheit bekannt, wann die Laservorrichtungen 104 und 105 aktiviert sind. Die Bildverarbeitungseinheit sucht dann im Bild 117 nach den Bildbereichen und/oder Bildpunkten, in denen die Projektionen 110 und 116 sichtbar sind. Da der Abstand 106 der Laserstrahlen 114 und 115 bekannt ist und sich entlang der Strecke 111 nicht ändert, ist es möglich direkt ein Größenmaß im Kamerabild 117 zu bestimmen.

Somit ist eine Kameraanordnung 101 gegeben, die durch die fest integrierten Laservorrichtungen 104 und 105 eine Kalibrierung ermöglicht. Die Kalibrierung ist insbesondere ohne definierte optische Marker möglich. Zudem ist es einfach, schnell und robust möglich absolute Abmessungen 102 der Objekte 119 des Bilds 117 zu ermitteln. Somit ist das System mit dem Kameraanordnungen 101 insbesondere für eine nachträgliche Installation an dem Kraftfahrzeug 100 geeignet. Die Laservorrichtungen 104 und 105 sind so ausgebildet, dass sie räumlich gut in das gemeinsame Gehäuse mit der Kamera 102 integrierbar sind. Beispielsweise werden die Laservorrichtungen 104 und 105 zu definierten und bekannten Zeitpunkten aktiviert, beispielsweise wenn das Kraftfahrzeug 100 steht oder nach einem manuellen Starten des Kalibriervorgangs.

## Patentansprüche

1. Kameraanordnung für ein Kraftfahrzeug (100), umfassend:
- eine Kamera (102) mit einer optischen Mittelachse (103),
- eine erste Laservorrichtung (104), die eingerichtet ist einen ersten Laserstrahl (114) zu erzeugen,
- eine zweite Laservorrichtung (105), die eingerichtet ist einen zweiten Laserstrahl (115) zu erzeugen, wobei der erste (114) und der zweite (115) Laserstrahl jeweils gleichgerichtet zur Mittelachse (103) sind und die erste Laservorrichtung (104) und die zweite Laserstrahlvorrichtung (105) einen vorgegebenen Abstand (106) zueinander in einer Ebene quer zur Mittelachse (103) aufweisen.

2. Kameraanordnung nach Anspruch 1, umfassend:
- eine Steuerschnittstelle (107) zum Empfangen von Steuerinformationen, um die Erzeugung des ersten (114) und des zweiten (115) Laserstrahls zu aktivieren und/oder zu beenden.

3. System für ein Kraftfahrzeug zum Erstellen eines Gesamtbilds einer Umgebung (109) des Kraftfahrzeugs (100), umfassend eine Mehrzahl von Kameraanordnungen (101) nach Anspruch 1 oder 2.

4. Verfahren zum Betreiben einer Kameraanordnung (101) für ein Kraftfahrzeug (100), umfassend:
- Erzeugen eines ersten (114) und eines zweiten (115) Laserstrahls, wobei der erste (114) und der zweite (115) Laserstrahl einen vorgegebenen Abstand (106) zueinander aufweisen,
- Erfassen eines Bildes (117) mittels einer Kamera (102), so dass eine jeweilige Projektion (110, 116) des ersten (114) und des zweiten (115) Laserstrahls jeweils in dem Bild (117) abgebildet sind,
- Ermitteln eines Abstands (1118) der Projektionen (110, 116) im Bild (117) zueinander.

5. Verfahren nach Anspruch 4, umfassend:
- Ermittlung einer Strecke (111) zwischen der Kamera (102) und einem Untergrund (113), der auf dem Bild (117) abgebildet ist und auf den der erste (114) und der zweite (115) Laserstrahl projiziert werden, in Abhängigkeit von dem vorgegebenen Abstand (106) und dem ermittelten Abstand (118).

6. Verfahren nach Anspruch 4 oder 5, umfassend:
- Ermitteln einer Abmessung (121) eines Bildelements (120) des erfassten Bildes (1117), das ein Objekt (119) abbildet,
- Ermitteln eines Verhältnisses der ermittelten Abmessung (121) zu dem ermittelten Abstand (118),
- Ermitteln einer tatsächlichen Abmessung (122) des Objekts (119) in Abhängigkeit des ermittelten Verhältnisses.

7. Verfahren nach Anspruch 6, umfassend:
- Ermittlung einer Länge (123) des Kraftfahrzeugs (100) mittels mindestens einer seitlich am Kraftfahrzeug (100) angeordneten Kameraanordnung (101).

8. Verfahren nach Anspruch 6 oder 7, umfassend:
- Ermittlung einer Breite des Kraftfahrzeugs (100) mittels mindestens einer im Frontbereich und/oder Heckbereich am Kraftfahrzeug (100) angeordneten Kameraanordnung (101).

9. Vorrichtung für ein Kraftfahrzeug, die dazu ausgebildet ist, ein Verfahren nach einem der Ansprüche 1 bis 8 durchzuführen.
